# FASCICULE DE BREVET EUROPEEN

(11) **EP 2 770 941 B1**
(45) Date de publication et mention de la délivrance du brevet: **26.04.2017**
(21) Numéro de dépôt: 12787796.7
(22) Date de dépôt: 22.10.2012
(51) Int. Cl.: A61C 7/36

(54) **APPAREIL DENTAIRE POUR TRAITER LA MALOCCLUSION**
DENTALGERÄT ZUR BEHANDLUNG VON FEHLOKKLUSION
DENTAL APPLIANCE TO TREAT A MALOCCLUSION

(30) Priorité: 28.10.2011 FR 1159803
(43) Date de publication de la demande: 03.09.2014
(73) Titulaire: Remox SA, 2441 Luxembourg (LU)
(72) Inventeur: DESOUCHES, Renaud, F-13090 Aix-en-Provence (FR)
(74) Mandataire: Schmidt, Martin Peter
(86) Numéro de dépôt international: PCT/FR2012/052414
(87) Numéro de publication internationale: WO 2013/060973

(56) Documents cités:
- WO-A1-99/53859
- WO-A2-2006/125216
- JP-A- 59 125 553
- US-A- 4 382 783
- US-A- 5 678 990

## Description

### Domaine technique de l'invention

L'invention concerne le domaine des dispositifs correcteurs de malpositions dentofaciales, et concerne plus particulièrement un dispositif utilisé dans le cadre d'un traitement orthodontique de repositionnement de l'arcade mandibulaire par rapport à l'arcade maxillaire afin de corriger des défauts de Classe II et de Classe III pour enfants et adolescents et d'améliorer ainsi l'occlusion dentaire. Un dispositif correcteur selon l'invention est prévu pour permettre l'activation de la croissance mandibulaire, l'activation de la croissance maxillaire, ainsi que la propulsion mandibulaire nocturne pour lutter contre les apnées du sommeil.

### Etat de la technique

Les dysmorphoses de croissance maxillo-faciale de l'enfance peuvent entraîner un prognathisme ou un rétrognathisme maxillaire ou mandibulaire. Ces dysmorphoses peuvent être corrigées par l'utilisation d'appareillages ou dispositifs appelés activateurs de croissance, qui exercent une contrainte contrôlée sur la mandibule et que l'enfant porte pendant au moins une partie de la journée, pendant la phase de croissance maxillo-faciale.
Plus précisément, les activateurs de croissance mandibulaire sont des appareillages favorisant la croissance de la mandibule par une mise en propulsion contrainte ; les activateurs de croissance maxillaire sont des appareillages favorisant la croissance du maxillaire par une mise en rétropulsion contrainte de la mandibule.
Ces appareils peuvent être monoblocs, tels que le Bionator de Balters, ou biblocs.

On connaît différents types d'activateurs de croissance mandibulaire. À titre d'exemple ont connaît un activateur de classe II de type Lautrou, qui est constitué d'un dispositif monobloc fenêtré dans la région palatine-incisive, associé à une force extra-orale. On connaît également un activateur appelé bielles de Herbst. On connaît par ailleurs un système dit Liberty Bielle et un dispositif appelé Flip Lock de Herbst, qui peut être réalisé sur bagues ou coiffes pédodontiques.
On connaît par ailleurs des activateurs de type Frankel et de type Balters.

De tels activateurs sont décrit dans les demandes de brevet FR 2 702 141 (Henri Petit), WO 2004/026163 (Orthotain, Inc.), WO 86/04806 (Marcel Korn), EP 0 128 744-A2 (Farel A. Rosenberg), EP 1 108 397-A1 (Ortho Organizers), WO 96/41584 (Kussick Orthopedic Systems, LLC) et WO 2004/064662 (Orthotain Inc.).

Ces activateurs présentent différents inconvénients. Ainsi, certains activateurs sont difficiles à porter car ils ont d'assez grandes dimensions et ils sont visibles, en ayant des parties situées à l'extérieur de la cavité buccale, et, de surcroît, ils limitent l'ouverture buccale. Dans d'autres activateurs, des forces appliquées antérieurement entraînent une vestibulo-version des incisives inférieures ou une linguo-version des incisives supérieures.

On connaît également des dispositifs de type propulseur qui permettent de libérer la filière pharyngée par une propulsion de la mandibule. Ces dispositifs sont utilisés pour traiter l'apnée du sommeil. Ils sont décrits dans les demandes de brevet WO 2007/010332 (S. Schmidt et C. Scheeck), WO 95/14449 (N. Ingemarsson), WO 2007/146523 (RIC Investments, LLC), WO 2009/158424 (Bryan Keropian), WO 2008/048649 (S. Katz et P. Strong), FR 2 887 140 (Laurent Faucher), WO 2005/082452 (I. Sanders), WO 01/52928 (Respironics, Inc.), WO 2009/096889 (Gellerfors), EP 1 602 347-A1 (Georges Magnin), WO 94/23673 (Leonard Halstrom), WO 2006/058514 (Winfried Toussaint), WO 2005/000142 (Bryan Keropian), WO 2007/136551 (Bryan Keropian), EP 1 203 570-A2 (Winfried Toussaint), WO 01/45604 (Peter L'Estrange et al.), WO 2006/125216 (John D. Summer), WO 2005/074480 (Massachusetts General Hospital), FR 2 816 203 (Bernard Fleury et al.), et dans les brevets US 5,427,117 et US 5,566,683 (W. Thornton), EP 0 845 962-B1 (M. David et al.) concernant un produit vendu sous la marque SNORFLEX, et FR 2 831 427 B1 (Ph. Mousselon et L. Baratier), concernant un produit vendu sous la marque NARVAL.

Certaines de ces orthèses sont en vente en taille unique. D'autres sont fabriquées sur mesure après prise d'empreintes. Elles ont toutes l'inconvénient de limiter l'ouverture buccale ou de ne pas ne la permettre du tout. Dans certains cas, lorsque les forces sont appliquées antérieurement, elles peuvent entraîner une vestibulo-version des incisives inférieures.

On connaît par ailleurs des dispositifs orthodontiques comportant des tiges montées articulées entre elles et fixées aux dents ou aux arcades dentaires par des articulations pivotantes ou par des rotules.

Le document US 4 382 783 décrit un tel dispositif orthodontique pour le traitement d'un défaut de type Classe II comportant deux bras rigides reliés ensemble, à l'une de leur extrémité, par une articulation pivotante, l'autre extrémité étant montée par un lien de type charnière à une molaire supérieure, et respectivement inférieure. Dans une variante, un ressort de torsion est monté autour de l'articulation centrale pour rapprocher les deux bras. Permettant, certes, une plus grande ouverture de la cavité buccale que les dispositifs précédemment décrits, ce dispositif présente toutefois comme inconvénient le fait de faire appel à un ancrage postérieur, notamment sur les molaires supérieure et inférieure, ancrage qui, combiné avec une action de rotation des deux bras autour de la charnière centrale, fait que la force de traction s'applique sur les deux arcades, ce qui diminue l'efficacité du traitement. De surcroît, la fermeture du dispositif autour d'une charnière librement suspendue entre les deux arcades risque d'entraîner dans son mouvement la membrane interne des joues et de ce fait, s'avérer gênant en utilisation.

Le document WO 99/53859 décrit un autre dispositif orthodontique comportant deux bras rigides articulés entre eux autour d'une charnière centrale et montés chacun en pivotement par rapport à des points d'ancrage des arcades dentaires supérieure et inférieure. Ainsi un premier bras est amené à pivoter autour d'un premier point d'ancrage situé au niveau d'une molaire de l'arcade dentaire supérieure et le deuxième bras autour d'un deuxième point d'ancrage situé au niveau d'une canine de l'arcade dentaire inférieure. Dans une variante, un ressort de compression est agencé le long du bras inférieur pour rappeler l'ouverture de la cavité buccale. Assurant, certes, un meilleur positionnement de chaque bras rigide, et donc d'application de la force, par rapport des arcades dentaires, ce dispositif présente comme inconvénient le maintien en position ouverte de la bouche, ce qui s'avère inconfortable tout en présentant un manque d'efficacité, car il est connu que l'efficacité optimale est atteinte en position de fermeture de la cavité buccale.

Le but de la présente invention est de remédier au moins en partie à ces inconvénients et de proposer un dispositif d'activation de croissance mandibulaire, de croissance maxillaire et de propulsion mandibulaire qui permet de réaliser un déplacement de la mandibule par rapport au maxillaire lors de l'occlusion afin d'obtenir un repositionnement efficace de l'arcade mandibulaire par rapport à l'arcade maxillaire, tout en autorisant une ouverture correcte de la cavité buccale.

Un autre but de l'invention est de proposer un dispositif d'activation de croissance mandibulaire, de croissance maxillaire et de propulsion mandibulaire qui est confortable à porter, tout en assurant un déplacement suffisant pour permettre de remédier aux défauts de croissance des arcades dentaires supérieure et inférieure.

Un autre but de l'invention est de proposer un dispositif d'activation de croissance mandibulaire, de croissance maxillaire et de propulsion mandibulaire qui est apte à appliquer les forces nécessaires au traitement, de manière constante et durable dans le temps.

Un autre but de l'invention est de proposer un dispositif d'activation de croissance mandibulaire, de croissance maxillaire et de propulsion mandibulaire qui puisse s'adapter facilement à la personne subissant le traitement, tout en étant de construction simplifiée et pouvant être fabriqué de manière économique en série.

### Objet

Selon l'invention, les problèmes sont résolus par un dispositif d'activation de croissance mandibulaire, de croissance maxillaire et de propulsion mandibulaire comportant
- une première tige comportant une extrémité avant et une extrémité arrière ;
- une deuxième tige comportant une extrémité avant et une extrémité arrière ;
- lesdites première et deuxième tiges étant relativement rigides et ayant des longueurs différentes l'une par rapport à l'autre ;
- une première articulation pivotante apte à relier l'extrémité avant de la première tige à une première arcade dentaire d'une personne (soit à l'arcade maxillaire soit à l'arcade mandibulaire) ;
- une deuxième articulation pivotante apte à relier l'extrémité avant de la deuxième tige à une deuxième arcade dentaire de la personne (soit à l'arcade mandibulaire, soit à l'arcade maxillaire) ;
- une troisième articulation pivotante reliant entre elles les extrémités arrière des tiges permettant au dispositif de passer d'une position ouverte appelée aussi « position d'ouverture » à une position fermée appelée aussi « position de fermeture » et de suivre ainsi le mouvement d'ouverture et de fermeture des mâchoires,
du fait que ladite troisième articulation pivotante est reliée à l'arcade dentaire portant la tige la plus courte moyennant des moyens élastiques de rappel du dispositif en position de fermeture de manière à ce que lesdites tiges soient aptes à induire un déplacement relatif de l'arcade mandibulaire par rapport à l'arcade maxillaire en position de fermeture des mâchoires.

Ainsi, le dispositif de l'invention comprend des tiges sensiblement rigides, ayant des longueurs différentes qui sont reliées chacune par une articulation pivotante ou charnière à l'une des arcades dentaires et qui sont reliées entre elles par une troisième articulation pivotante ou charnière. Par extrémité avant on comprend l'extrémité mésiale d'une tige et par extrémité arrière on comprend l'extrémité distale de la tige. Ces première et deuxième tige peuvent certes, être agencées que d'un côté de la cavité buccale, mais on préfère toutefois agencer deux jeux de telles tiges, un de chaque côté de la cavité buccale, du côté extérieur des arcades dentaires. Ceci permet déjà d'assurer une bonne amplitude d'ouverture de la cavité buccale pendant le traitement effectué avec le dispositif.

Plus particulièrement selon l'invention, la troisième articulation pivotante est reliée à l'arcade dentaire portant la tige la plus courte par des moyens élastiques de rappel du dispositif en position de fermeture. L'articulation pivotante est ainsi reliée à l'arcade dentaire qui supporte en pivotement la tige la plus courte, au même niveau que le point de support de la tige la plus courte ou en retrait (en partie postérieure) de celui-ci. Ceci permet, d'une part, de garantir le déplacement antéro-postérieur sous contrainte de la mandibule par rapport au maxillaire lors de l'occlusion pour une efficacité optimale du traitement. D'autre part, la troisième articulation du dispositif restant près de la mâchoire portant la tige la plus courte, l'amplitude de mouvement en ouverture est déterminée par la longueur de cette dernière, ce qui permet au dispositif d'être confortable à porter et donc d'éviter toute gêne provoquée par le déplacement de la position d'ouverture à celle de fermeture.

De préférence, l'axe de pivotement de la première articulation pivotante est situé près d'une canine d'une arcade dentaire, l'axe de pivotement de la seconde articulation pivotante est situé près d'une première molaire de l'arcade dentaire opposée et l'axe de pivotement de ladite troisième articulation pivotante se trouve dans un plan occlusal en position de fermeture des mâchoires.

Ainsi, dans le cas d'un dispositif prévu pour le traitement d'un défaut de type Classe II, le dispositif de l'invention présente une première tige ou tige plus longue ou tige supérieure qui a une fixation antérieure au niveau de la canine pour le maxillaire supérieur et une deuxième tige ou tige plus courte qui a une fixation postérieure au niveau la première molaire inférieure. La longueur de la tige supérieure sera plus importante que celle inférieure afin de permettre une propulsion de la mandibule. Un ressort reliant l'axe charnière entre les deux tiges et le support mandibulaire force l'occlusion en position antérieure. L'avantage physiologique majeur de cet appareillage réside dans le point d'application postérieur de la force au niveau de la mandibule ce qui limite la vestibulo-version des incisives inférieures. La même technique sera employée pour les propulsions mandibulaires nocturnes dans le cadre d'apnée du sommeil.

Dans le cas d'un dispositif prévu pour le traitement d'un défaut de type Classe III favorisant la rétropulsion mandibulaire, le dispositif de l'invention présente une première tige ou tige plus longue ou tige inférieure ayant une fixation antérieure au niveau de la canine pour la mandibule et une deuxième tige ou tige plus courte qui a une fixation postérieure au niveau la première molaire supérieure. La longueur de la tige inférieure est plus importante que celle supérieure afin de permettre une rétropulsion de la mandibule. Un ressort reliant l'axe charnière entre les deux tiges et la gouttière maxillaire force l'occlusion en position postérieure. L'avantage physiologique majeur de cet appareillage réside dans le point d'application postérieur de la force au niveau du maxillaire ce qui limite la vestibulo-version des incisives supérieures.
Les trois axes de pivotement sont parallèles entre eux et parallèles à l'axe de pivotement de la mandibule, ce qui assure un mouvement naturel d'ouverture et de fermeture des mâchoires.

Avantageusement, la deuxième tige est plus courte et présente une longueur sensiblement égale à l'amplitude d'ouverture de la cavité buccale mesurée à l'endroit de son agencement.

Cette tige plus courte effectue un mouvement de pivotement d'une position inclinée, en position de fermeture des mâchoires, jusqu'à une position sensiblement verticale, lors de l'ouverture des mâchoires, ce qui délimite l'amplitude de mouvement et la course des moyens élastiques de rappel.

De préférence, le déplacement de l'arcade mandibulaire par rapport à l'arcade maxillaire se fait dans un plan sensiblement horizontal en position de fermeture du dispositif.

Les trois articulations pivotantes sont agencées de manière à ce que, en position de fermeture des mâchoires, la première et la deuxième articulations soient agencées sensiblement dans un même plan. Ceci permet un déplacement des arcades l'une par rapport à l'autre en position de fermeture des mâchoires et dans un plan occlusal, ce qui améliore encore plus l'efficacité du traitement effectué avec le dispositif de l'invention. Avantageusement, le rapport des longueurs des deux tiges est compris entre 0,3 et 0,5. Après de nombreux essais réalisés en laboratoire, il a été constaté que ce rapport permettait de réaliser un traitement efficace et une ouverture optimale de la cavité buccale. En effet, la tige la plus longue présente un déplacement sensiblement horizontal lors du passage de la position d'ouverture du dispositif alors que la tige la plus courte, présente elle, un déplacement sensiblement vertical.

De préférence, au moins l'une desdites tiges est réglable en longueur.

Lors d'un traitement de défaut de classe II, la tige supérieure est de préférence réglable en longueur pour permettre une correction progressive de la croissance mandibulaire. Des réglages différents des deux tiges supérieures permettent de régler les asymétries de croissance mandibulaire.
Lors d'un traitement de défaut de type classe III, la tige inférieure est de préférence réglable en longueur pour permettre une correction progressive de la croissance maxillaire et un ralentissement de la croissance mandibulaire. Des réglages différents des deux tiges supérieures permettent de régler les asymétries de croissance mandibulaire. La croissance du maxillaire peut être potentialisée par l'adjonction d'une force extra-orale (type Delaire) ; le point d'application de la force est avantageusement situé sur la partie antérieure de la gouttière maxillaire (entre l'incisive latérale et la canine).

Avantageusement, lesdits moyens élastiques comprennent un ressort de traction.
On aurait pu choisir des élastiques tels que les élastiques élastomères pour relier la troisième articulation pivotante à l'arcade dentaire. On préfère toutefois utiliser un ressort de traction pour ses caractéristiques de robustesse mécanique et pour la constance de la force appliquée pendant toute la durée d'utilisation du dispositif.

De préférence, le dispositif de l'invention comprend des moyens de réglage de la force dudit ressort. Ceci permet d'adapter la force de rappel à la sensibilité de chaque personne.

Les buts de l'invention sont également atteints avec un appareil dentaire comportant une gouttière supérieure apte à être fixée à l'arcade maxillaire, une gouttière inférieure apte à être fixée à l'arcade mandibulaire et un dispositif selon l'invention relié par la première tige à ladite gouttière supérieure et par la deuxième tige à ladite gouttière inférieure.

Un tel appareil dentaire comprend deux gouttières et un dispositif de l'invention monté articulé sur les gouttières. Ceci permet d'assurer une bonne fixation aux arcades dentaires, tout en offrant la possibilité de pouvoir retirer facilement l'appareil de la cavité buccale. Un tel appareil convient plus particulièrement aux enfants n'ayant pas encore une dentition définitive.

Avantageusement, au moins l'une des gouttières supérieure ou inférieure de l'appareil dentaire de l'invention contient un matériau de remplissage, de préférence au moins un polymère liquide, semi-liquide ou gélatineux et présente un ou plusieurs évents traversant ses parois et réalisées de manière à permettre l'expansion de la gouttière et son adaptation à la taille de l'arcade dentaire qu'elle englobe après avoir reçu ledit matériau de remplissage.

Ceci permet d'adapter de manière plus précise l'appareil dentaire de l'invention à la configuration des mâchoires de la personne l'utilisant.

### Description des figures

La figure 1a illustre de manière schématique la position fermée des mâchoires d'une personne ayant un défaut de type classe II d'Angle et les figures 1b et 1c illustrent la mise en place d'un dispositif de l'invention en position d'ouverture, respectivement de fermeture.
La figure 2a illustre de manière schématique la position fermée des mâchoires d'une personne ayant un défaut de type classe III d'Angle et les figures 2b et 2c illustrent la mise en place d'un dispositif de l'invention en position d'ouverture, respectivement de fermeture.
Les figures 3a et 3b illustrent, de manière schématique, un premier exemple de réalisation du dispositif de l'invention, en position d'ouverture, utilisé pour traiter des défauts de classe III, respectivement des défauts de classe II d'Angle.
Les figures 4a et 4b illustrent, de manière schématique, un deuxième exemple de réalisation du dispositif de l'invention, en position d'ouverture, utilisé pour traiter des défauts de classe III, respectivement des défauts de classe II d'Angle.
Les figures 5a et 5b illustrent différentes exemples de réalisation d'une tige courte du dispositif de l'invention.
La figure 6 illustre un exemple de réalisation d'une tige longue du dispositif de l'invention.
Les figures 7a à 7c illustrent différentes étapes de réalisation des gouttières utilisées avec le dispositif de l'invention.

**Liste des repères :**

| | |
|---|---|
| 1 | Première gouttière |
| 2 | Deuxième gouttière |
| 3 | Première tige |
| 4 | Deuxième tige |
| 5 | Moyens élastiques |
| 6 | Première charnière |
| 7 | Troisième charnière |
| 8 | Deuxième charnière |
| 9 | Extrémité avant première tige |
| 10 | Extrémité arrière première tige |
| 11 | Extrémité avant deuxième tige |
| 12 | Extrémité arrière deuxième tige |
| 14 | Ressort de traction |
| 15 | Dispositif d'activation de croissance maxillaire ou mandibulaire et de propulsion mandibulaire |
| 16 | Fourreau tige courte |
| 17 | Coulisseau tige courte |
| 18 | Tête coulisseau |
| 19 | Orifice d'articulation |
| 20 | Orifice d'articulation |
| 21 | Languette |
| 22 | Perçages |
| 23 | Gaine tige longue |
| 24 | Perçages |
| 25 | Vis |
| 26 | Orifice d'articulation |
| 27 | Orifice d'articulation |
| 28 | Première extrémité ressort |
| 29 | Deuxième extrémité ressort |
| 30 | Feuille thermoformée |
| 31 | Gel polymère |
| 32 | Event |

### Description détaillée

Le dispositif **15** selon un mode préféré de réalisation de l'invention et tel qu'illustré dans les figures annexées, comprend une première et deuxième gouttière **1,2** réalisée chacune de manière à pouvoir être disposée autour d'une arcade dentaire, les gouttières étant planes sur les faces occlusales. Chaque gouttière a une forme générale en « U », les gouttières **1,2** étant reliées de chaque côté par des premières et deuxièmes tiges **3,4** articulées moyennant trois articulations pivotantes ou charnières **6,7,8** d'axes parallèles et parallèles à l'axe de pivotement de la mandibule. Le dispositif comprend également un moyen de rappel élastique **5** le reliant à l'une des arcades dentaires, tel qu'il sera expliqué par la suite. Plus précisément, une première gouttière **1** est reliée de chaque côté à une deuxième gouttière **2** par l'intermédiaire d'un dispositif **15** moyennant des moyens de fixation des gouttières à une première tige **3** et à une deuxième tige **4** du dispositif. Chaque tige **3,4** est fixée à une gouttière **1,2** par une première et deuxième articulation **6,8** appelées articulations périphériques. Plus précisément, la première tige **3** est reliée par une première charnière **6** à la première gouttière **1,** et la deuxième tige **4** est reliée par une deuxième charnière **8** à la deuxième gouttière **2.** Les première et deuxième tiges **3,4** sont reliées entre elles par une troisième charnière **7** ou charnière centrale. Un moyen de rappel élastique **5,** par exemple un ressort ou un élastique en caoutchouc ou en élastomère, relie la charnière centrale **7** à la gouttière portant la tige la plus courte **4.**

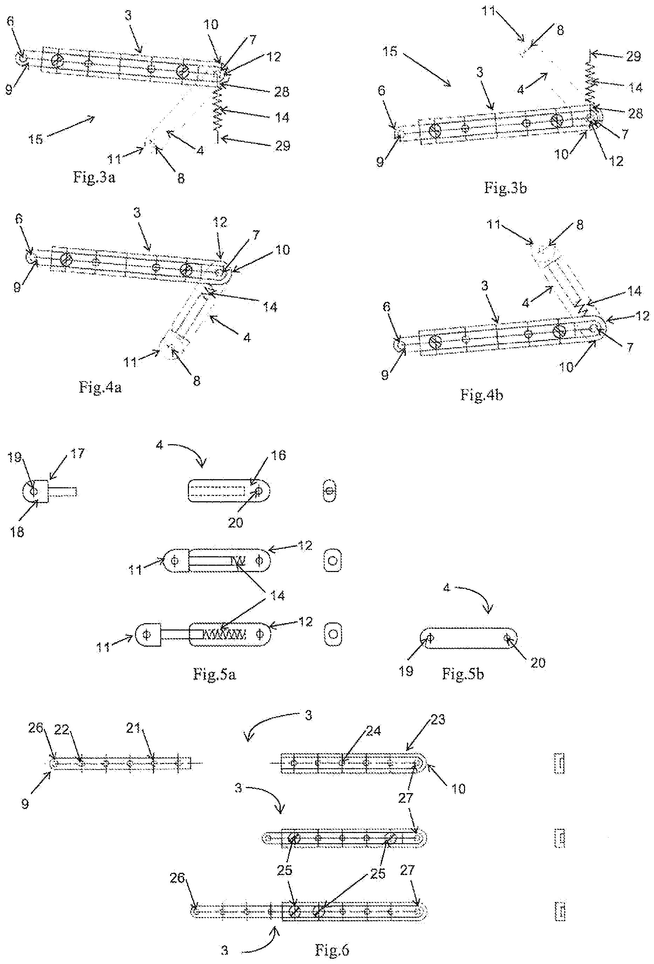

Dans un premier exemple de réalisation, tel que mieux visible aux figures 3a et 3b le moyen élastique peut être un ressort de traction **14** reliant l'axe de l'articulation centrale **7** et un point de fixation situé au niveau de l'arcade dentaire ou de la gouttière. La première tige **3** est avantageusement plus longue que la deuxième tige **4.** Le ressort de traction 14 comporte une première extrémité **28** reliée à l'axe de l'articulation centrale **7** et une deuxième extrémité **29** qui est destinée à être reliée derrière la première molaire, par exemple constitué par un ancrage situé au niveau de la deuxième molaire.

Dans un deuxième exemple de réalisation, tel que mieux visible aux figures 4a et 4b, le moyen élastique **5** peut être un ressort de traction **14** agencé le long de la deuxième tige **4,** ressort qui relie l'axe de l'articulation centrale **7** et l'extrémité du coulisseau **17** de la tige **4,** tel qu'il sera expliqué par la suite.

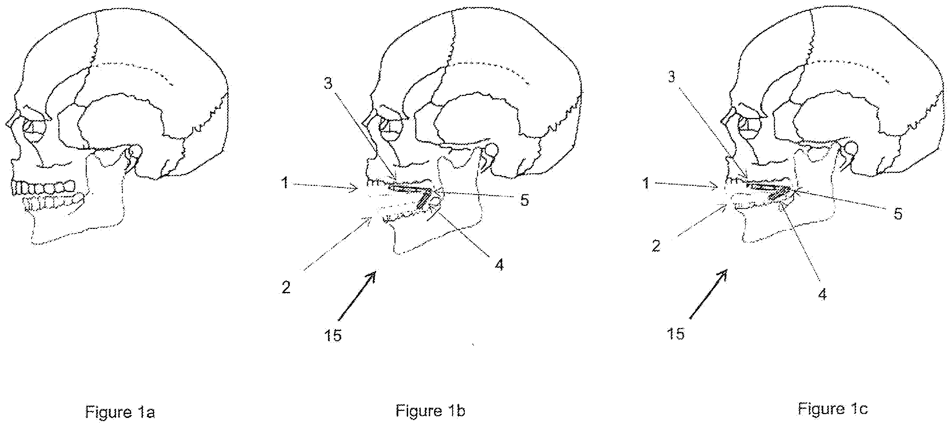

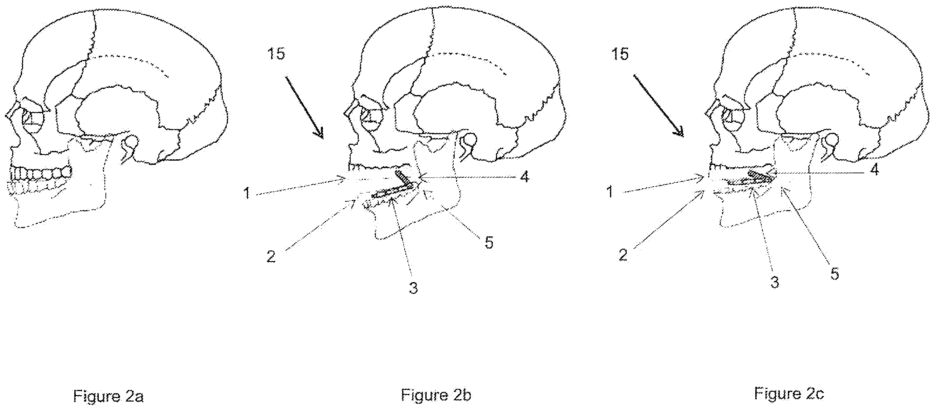

Dans un premier mode de réalisation du dispositif **15** de l'invention, et tel qu'illustré aux figures 3a et 4a, le dispositif de l'invention est utilisé pour corriger des défauts de type classe II d'Angle ou pour réaliser une propulsion mandibulaire nocturne dans le cadre de l'apnée du sommeil. Tel que mieux visible aux figures 1 et 2, les charnières **6,7,8** sont fixées proches des extrémités respectives **9,10,11,12** des tiges **3,4.** La deuxième charnière **8** se trouve proche de l'extrémité de la seconde gouttière **1,** c'est-à-dire au niveau de la première molaire lorsque ladite gouttière est posée sur les dents mandibulaires. La première charnière **6** se trouve avantageusement au niveau des canines lorsque ladite gouttière est posée sur les dents maxillaires. En position fermée des mâchoires le dispositif réalise un déplacement antéro-postérieur sous contrainte de la mandibule, dans le sens de la flèche F1, par rapport au maxillaire lors de l'occlusion ce qui assure une efficacité optimale du traitement.

Dans un deuxième mode de réalisation du dispositif **15** de l'invention, et tel qu'illustré aux figures 3b et 4b, le dispositif de l'invention est utilisé pour corriger des défauts de type classe III d'Angle. Tel que mieux visible aux figures 4 et 5, les charnières **6,7,8** sont fixées proches des extrémités respectives **9,10,11,12** des tiges **3,4.** La deuxième charnière **8** se trouve proche de l'extrémité de la première gouttière **1,** c'est-à-dire au niveau de la première molaire lorsque ladite gouttière est posée sur les dents maxillaires. La première charnière **6** se trouve avantageusement au niveau des canines lorsque ladite gouttière est posée sur les dents mandibulaires. En position fermée des mâchoires le dispositif réalise un déplacement antéro-postérieur sous contrainte de la mandibule, dans le sens de la flèche F2, par rapport au maxillaire lors de l'occlusion ce qui assure une efficacité optimale du traitement.

Dans une première variante de réalisation, tel que mieux visible à la figure 5b, la deuxième tige **4** est réalisée en une pièce de longueur fixe, de forme allongée, deux orifices **19, 20** étant prévus à ses extrémités pour coopérer avec les axes des articulations **7** et **8.** Dans ce cas, plusieurs tiges de différentes longueurs sont prévues afin de pouvoir choisir la tige de longueur adaptée à la morphologie de la personne.

Dans une deuxième variante de réalisation, tel que mieux visible à la figure 5a, la tige **4** est réalisée sous forme d'un ensemble comportant un coulisseau **17,** un fourreau **16** et le ressort de traction **14.** Le coulisseau **17** comporte une extrémité présentant une tête **18** de forme générale bombée munie d'un orifice d'extrémité **19** à travers lequel passe l'axe de l'articulation **8,** l'extrémité opposée étant reliée au ressort de traction **14.** Le coulisseau **17** est monté à possibilité de déplacement axial à l'intérieur du fourreau **16.** Le fourreau **16** comporte un orifice d'extrémité **20** à travers lequel passe l'axe de l'articulation **7.** La longueur de la tige **4** est variable et dépend des caractéristiques du ressort de traction **14** choisi. Ceci permet de mieux adapter la longueur de la tige **4** à la morphologie du patient.

Dans une variante de réalisation de la tige **3,** tel que mieux visible à la figure 6, la tige **3** présente une longueur variable. La tige **3** est un ensemble comportant une languette **21** muni de plusieurs orifices **22** uniformément répartis sur sa longueur et d'un orifice d'extrémité **26.** La languette **21** est montée coulissante dans une gaine **23,** cette dernière étant munie de plusieurs orifices **24,** uniformément répartis sur sa longueur, ainsi que d'un orifice d'extrémité **27.** La longueur de la tige **3** est déterminée en fonction de la morphologie de la personne, en faisant coulisser la languette **21** à l'intérieur de la gaine **23** et en la bloquant en position moyennant deux vis **25** coopérant avec deux orifices **22** de la languette **21.** Dans une autre variante de réalisation de la tige 3 (non visible sur les dessins), celle-ci est de longueur fixe, plusieurs tiges de longueurs différentes étant prévues. Ceci permet de mieux adapter la longueur de la tige **3** à la morphologie du patient, au défaut à corriger, ainsi qu'aux diverses phases du traitement.

Les tiges **3,4** peuvent être réalisées en tout matériau approprié, et en particulier en matériau polymère ou en un acier inoxydable exempt de nickel.

Les gouttières **1,2** peuvent être réalisées en tout matériau approprié, et en particulier en matériau polymère.

Dans un premier mode de réalisation, le dispositif est fabriqué sur mesure à partir d'une empreinte des dents maxillaires et mandibulaires du patient et en mesurant l'ouverture de la cavité buccale. L'ouverture maximale de la cavité buccale détermine la longueur de la deuxième tige **4** ou la tige la plus courte qui arrive en une position sensiblement verticale en situation d'ouverture maximale des mâchoires. La longueur de la première tige 3 ou la tige la plus longue es déterminée par l'ampleur du défaut à corriger ou la différence de positionnement entre les incisives supérieures et les incisives inférieures.

Dans un deuxième mode de réalisation, le dispositif est réalisé en tailles fixes, par exemple en trois ou quatre tailles fixes. Dans une variante de ce mode de réalisation, les gouttières sont réalisées en un matériau thermoformable, de manière à permettre au patient, après un léger échauffement des gouttières (par exemple en les trempant dans l'eau chaude), d'adapter leur forme à celle de ses dents, en positionnant les gouttières sur ses dents maxillaires et mandibulaires et en serrant la mâchoire pour permettre aux gouttières d'épouser au mieux la forme des dents alignées dans les mâchoires ; après refroidissement des gouttières à la température du corps, cette déformation deviendra permanente.

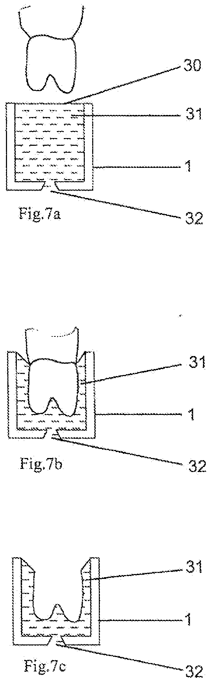

Dans un troisième mode de réalisation, les gouttières sont fournies en tailles standard, mais sont spécialement adaptées au patient. Tel que mieux visible aux figures 7a à 7c, la gouttière maxillaire **1** est remplie d'un produit liquide, semi-liquide ou gélatineux, tel un gel polymère **31,** et comporte, dans sa partie supérieure, une feuille thermoformée **30** et, dans sa partie inférieure, au moins un évent **32** (ou fente) à travers laquelle peut s'écouler ledit produit. Dans ce mode de réalisation, on adapte la gouttière maxillaire, qui a été mise en place sur les dents maxillaires du patient, à la morphologie du patient. Ainsi, en utilisation on commence par retirer la feuille **30** (fig. 7a) avant utilisation, puis en introduisant la gouttière autour des dents de l'arcade dentaire (fig.7b) de manière à ce que le surplus de produit polymère liquide, semi-liquide ou gélatineux, tel que le gel **31,** puisse s'écouler par ledit évent **32.** Ledit produit polymère est ensuite solidifié par une technique appropriée, par exemple par refroidissement à la température du corps, ou par polymérisation, ladite polymérisation pouvant être induite par exemple par un initiateur chimique qui se solidifie après un temps prédéterminé, ou par voie photochimique. On peut utiliser plusieurs évents **32,** de préférence de forme conique, ou évasée (en contre-dépouille) comme montré sur les fig. 7a à 7c. La gouttière mandibulaire **2** peut être obtenue de manière similaire à la gouttière maxillaire **1.**

Ce mode de réalisation permet d'obtenir un produit mieux adapté à la physiologie du patient qu'un produit standard, et moins coûteux qu'un produit sur mesure fabriqué à partir d'empreintes. En particulier, ce procédé permet d'adapter convenablement la gouttière à la mâchoire du patient en une seule séance de traitement.

Dans une variante de l'invention le dispositif est fixé sur des fils qui relient des bagues fixées aux dents des arcades maxillaire et respectivement mandibulaire.

Dans une autre variante de réalisation de l'invention (non représentée aux figures), le dispositif comprend un vérin transversal solidaire des branches d'une gouttière maxillaire permettant une expansion transversale de l'arcade dentaire qu'elle enveloppe afin de l'adapter aux dimensions de l'autre arcade dentaire.

D'autres exemples et modes de réalisation de l'invention peuvent être envisagés sans sortir du cadre de ces revendications.

## Revendications

1. Dispositif d'activation de croissance mandibulaire, de croissance maxillaire et de propulsion mandibulaire comportant :
- une première tige (3) comportant une extrémité avant (9) et une extrémité arrière (10) ;
- une deuxième tige (4) comportant une extrémité avant (11) et une extrémité arrière (12) ;
- lesdites première (3) et deuxième tiges (4) étant relativement rigides et ayant des longueurs différentes l'une par rapport à l'autre ;
- une première articulation pivotante (6) apte à relier l'extrémité avant (9) de la première tige (3) à une première arcade dentaire d'une personne;
- une deuxième articulation pivotante (8) apte à relier l'extrémité avant de la deuxième tige (4) à la deuxième arcade dentaire de la personne,
- une troisième articulation pivotante (7) reliant entre elles les extrémités arrière (10,12) des tiges (3,4) permettant au dispositif de passer d'une position ouverte à une position fermée et de suivre ainsi le mouvement d'ouverture et de fermeture des mâchoires,
**caractérisé en ce que** ladite troisième articulation pivotante (7) est apte à être reliée à l'arcade dentaire portant la tige la plus courte moyennant des moyens élastiques (5) de rappel du dispositif en position de fermeture de manière à ce que lesdites tiges soient aptes à induire un déplacement relatif de l'arcade mandibulaire par rapport à l'arcade maxillaire en position de fermeture des mâchoires.

2. Dispositif selon la revendication 1, **caractérisé en ce que** l'axe de pivotement de la première articulation pivotante (6) est adapté à être situé près d'une canine d'une arcade dentaire, l'axe de pivotement de la seconde articulation pivotante (8) est adapté à être situé près d'une première molaire de l'arcade dentaire opposée et que l'axe de pivotement de ladite troisième articulation pivotante (7) se trouve dans un plan occlusal en position de fermeture des mâchoires.

3. Dispositif selon l'une des revendications précédentes, **caractérisé en ce que** la deuxième tige (4) est plus courte et adaptée à présenter une longueur sensiblement égale à l'amplitude d'ouverture de la cavité buccale mesurée à l'endroit de l'agencement de la tige (4).

4. Dispositif selon l'une des revendications précédentes, **caractérisé en ce que** le déplacement de l'arcade mandibulaire par rapport à l'arcade maxillaire se fait dans un plan sensiblement horizontal en position de fermeture du dispositif.

5. Dispositif selon l'une des revendications précédentes, **caractérisé en ce que** le rapport des longueurs des deux tiges (3,4) est compris entre 0,3 et 0,5.

6. Dispositif selon l'une des revendications précédentes, **caractérisé en ce qu'**au moins l'une desdites tiges (3,4) est réglable en longueur.

7. Dispositif selon l'une des revendications précédentes, **caractérisé en ce que** lesdits moyens élastiques (5) comprennent un ressort de traction (14).

8. Dispositif selon la revendication 7, **caractérisé en ce qu'**il comprend des moyens de réglage de la force dudit ressort de traction (14).

9. Appareil dentaire comportant une gouttière supérieure (1) apte à être fixée à l'arcade maxillaire, une gouttière inférieure (2) apte à être fixée à l'arcade mandibulaire et un dispositif selon l'une des revendications précédentes relié par la première tige (3) à ladite gouttière supérieure (1) et par la deuxième tige (4) à ladite gouttière inférieure (2).

10. Appareil dentaire selon la revendication 9, **caractérisé en ce qu'**au moins l'une des gouttières supérieure (1) ou inférieure (2) contient un matériau de remplissage, de préférence au moins un polymère liquide, semi-liquide ou gélatineux (31) et présente un ou plusieurs évents (32) traversant ses parois et réalisées de manière à permettre l'expansion de la gouttière et son adaptation à la taille de l'arcade dentaire qu'elle englobe après avoir reçu ledit matériau de remplissage.

## Patentansprüche

1. Vorrichtung zum Aktivieren des Unterkieferwachstums, des Oberkieferwachstums und der Vorschiebung des Unterkiefers, die Folgendes umfasst;
- einen ersten Schaft (3) der ein vorderes Ende (9) und ein hinteres Ende (10) umfasst;
- einen zweiten Schaft (4), der ein vorderes Ende (11) und ein hinteres Ende (12) umfasst;
- wobei der erste (3) und der zweite Schaft (4) relativ starr sind und voneinander unterschiedliche Längen haben;
- ein erstes schwenkendes Gelenk (6), das geeignet ist, um das vordere Ende (9) des ersten Schafts (3) mit einem ersten Zahnbogen einer Person zu verbinden;
- ein zweites schwenkendes Gelenk (8), das geeignet ist, um das vordere Ende des zweiten Schafts (4) mit dem zweiten Zahnbogen der Person zu verbinden,
- ein drittes schwenkendes Gelenk (7), das die hinteren Enden (10, 12) der Schäfte (3, 4) verbindet, was es der Vorrichtung erlaubt, von einer offenen Position auf eine geschlossene Position überzugehen und dadurch der Öffnungs- und Schließbewegung der Kiefer zu folgen,
**dadurch gekennzeichnet, dass** das dritte schwenkende Gelenk (7) geeignet ist, um mit dem Zahnbogen, der den kürzeren Schaft trägt, anhand elastischer Mittel (5) zum Zurückstellen der Vorrichtung in Schließposition derart verbunden zu sein, dass die Schäfte geeignet sind, eine relative Verschiebung des Oberkieferbogens in Bezug zu dem Unterkieferbogen in Schließposition der Kiefer zu bewirken.

2. Vorrichtung nach Anspruch 1, **dadurch gekennzeichnet, dass** die Schwenkachse des ersten schwenkenden Gelenks (6) geeignet ist, nahe eines Eckzahns eines Zahnbogens zu liegen, wobei die Schwenkachse des zweiten schwenkenden Gelenks (8) angepasst ist, nahe einem ersten Molar des entgegengesetzten Zahnbogens zu legen, und dass die Schwenkachse des dritten schwenkenden Gelenks (7) in Schließposition der Kiefer in einer Okklusionsebene liegt.

3. Vorrichtung nach einem der vorhergehenden Ansprüche, **dadurch gekennzeichnet, dass** der zweite Schaft (4) kürzer und angepasst ist, um eine Länge im Wesentlichen gleich der Öffnungsamplitude der Mundhöhle an der Stelle der Anordnung des Schafts (4) gemessen aufzuweisen.

4. Vorrichtung nach einem der vorhergehenden Ansprüche, **dadurch gekennzeichnet, dass** die Verschiebung des Oberkieferbogens in Bezug zu dem Unterkieferbogen in einer Ebene im Wesentlichen horizontal in Schließposition der Vorrichtung erfolgt.

5. Vorrichtung nach einem der vorhergehenden Ansprüche, **dadurch gekennzeichnet, dass** das Verhältnis der Längen der zwei Schäfte (3, 4) zwischen 0,3 und 0,5 liegt.

6. Vorrichtung nach einem der vorhergehenden Ansprüche, **dadurch gekennzeichnet, dass** mindestens einer der Schäfte (3, 4) in der Länge einstellbar ist.

7. Vorrichtung nach einem der vorhergehenden Ansprüche, **dadurch gekennzeichnet, dass** die elastischen Mittel (5) eine Zugfeder (14) umfassen.

8. Vorrichtung nach Anspruch 7, **dadurch gekennzeichnet, dass** sie Mittel zum Einstellen der Kraft der Zugfeder (14) umfasst.

9. Zahnspange, die eine obere Schiene (1) umfasst, die geeignet ist, um an dem Unterkieferbogen befestigt zu sein, eine untere Schiene (2), die geeignet ist, um an dem Oberkieferbogen befestigt zu sein, und eine Vorrichtung nach einem der vorhergehenden Ansprüche, die durch den ersten Schaft (3) mit der oberen Schiene (1) und durch den zweiten Schaft (4) mit der unteren Schiene (2) verbunden ist.

10. Zahnspange nach Anspruch 9, **dadurch gekennzeichnet, dass** die obere Schiene (1) und/oder die untere Schiene (2) einen Füllstoff enthält, bevorzugt mindestens ein flüssiges, halbflüssiges oder gelförmiges Polymer (31), und eine oder mehrere Entlüftungen (32) aufweist, die ihre Wände durchqueren und derart hergestellt ist/sind, dass sie das Expandieren der Schiene und ihre Anpassung an die Größe des Zahnbogens, den sie einschließt, erlaubt, nachdem sie den Füllstoff erhalten hat.

## Claims

1. Device for activating mandibular growth, maxillary growth and mandibular advancement comprising:
- a first rod (3) comprising a front end (9) and a rear end;
- a second rod (4) comprising a front end (11) and a rear end (12);
- said first (3) and second rods (4) being relatively rigid and having different lengths with respect to one another;
- a first pivoting joint (6) capable of connecting the front end (9) of the first rod (3) to a first dental arch of a person;
- a second pivoting joint (8) capable of connecting the front end of the second rod (4) to the second dental arch of the person;
- a third pivoting joint (7) connecting the rear ends (10, 12) of the rods (3, 4) to one another enabling the device to go from an open position to a closed position, and thus to follow the movement of opening and closing of the jaws,
**characterized in that** said third pivoting joint (7) is capable of being connected to the dental arch supporting the shortest rod with elastic means (5) for returning the device to the closed position so that said rods are capable of causing a relative movement of the mandibular arch with respect to the maxillary arch in the closed position of the jaws.

2. Device according to claim 1, **characterized in that** the pivot axis of the first pivoting joint (6) is suitable for being located near a cuspid of a dental arch, the pivot axis of the second pivoting joint (8) is suitable for being located near a first molar of the opposite dental arch and the pivot axis of said third pivoting joint (7) is located in an occlusal plane in the closed position of the jaws.

3. Device according to one of the previous claims, **characterized in that** the second rod (4) is shorter and suitable for having a length substantially equal to the amplitude of opening of the oral cavity measured in the location where the rod (4) is placed.

4. Device according to one of the previous claims, **characterized in that** the movement of the mandibular arch with respect to the maxillary arch occurs in a substantially horizontal plane in the closed position of the device.

5. Device according to one of the previous claims, **characterized in that** the ratio of lengths of the two rods (3, 4) is between 0.3 and 0.5.

6. Device according to one of the previous claims, **characterized in that** the length of at least one of said rods (3, 4) can be adjusted.

7. Device according to one of the previous claims, **characterized in that** said elastic means (5) include a tension spring (14).

8. Device according to claim 7, **characterized in that** it includes means for adjusting the force of said tension spring (14).

9. Dental apparatus comprising an upper tray (1) capable of being attached to the maxillary arch, a lower tray (2) capable of being attached to the mandibular arch and a device according to one of the previous claims connected by the first rod (3) to said upper tray (1) and by the second rod (4) to said lower tray (2).

10. Dental apparatus according to claim 9, **characterized in that** at least one of the upper (1) or lower trays (2) contains a filling material, preferably at least one liquid, semi-liquid or gelatinous polymer (31) and has one or more vent holes (32) passing through its walls and produced so as to enable the expansion of the tray and the adaptation of the tray to the size of the dental arch that it surrounds after having received said filling material.
